# EUROPEAN PATENT APPLICATION

(11) **EP 1 483 963 A1**
(43) Date of publication of application: **08.12.2004**
(21) Application number: 03710297.7
(22) Date of filing: 11.03.2003
(51) Int. Cl.: A01K 85/00

(54) **FALSE BAIT**

(30) Priority: 11.03.2002 JP 2002064858
(71) Applicant: San-Ei Gen F.F.I., Inc., Toyonaka-shi, Osaka 561-0828 (JP)
(72) Inventor: SHINMURA, Takumi, c/o KANRO CO., LTD, Tokyo 165-8775 (JP); KIMURA, Syuuzo, c/o KANRO CO., LTD, Tokyo 165-8775 (JP); YUNOKI, Hiroyuki, c/o KANRO CO., LTD, Tokyo 165-8775 (JP); ISHII, Toshihiro, c/o SAN-EI GEN F.F.I., INC., Toyonaka-shi, Osaka 561-8588 (JP)
(74) Representative: Müller-Boré & Partner Patentanwälte
(86) International application number: PCT/JP2003/002853
(87) International publication number: WO 2003/075649

(57) **Abstract**

This invention provides for an environmentally friendly live bait-modeled artificial lure for catching fish. The artificial lure in the present invention is unique in that it contains as its chief components (1) a protein crosslinked by a protein crosslinking enzyme, and one of or both that selected from (2) a non-water-soluble polysaccharide and (3) a group consisting of monosaccharides, oligosaccharides, glutinous starch syrup, and dextrins. By making the above agents active ingredients, the agent mixture can be produced to be moderately viscous and, as a result, manufacturability can be improved and degassing can be performed easily even in the case of air bubble engulfment.

## Description

### TECHNICAL FIELD

The present invention relates to an artificial lure for catching fish, which is modeled on live bait, manufactured using an elastic material.

### BACKGROUND ART

In addition to natural bait (hereafter, "live bait") such as insects, small fish, and crustaceans, artificial lures called lures, worms etc. that resemble the shapes of live bait are conventionally widely used as bait for catching fish. These artificial lures are manufactured using materials such as metal and plastic that are normally long lasting, but that cause pollution of the environment. Namely, artificial lures consisting of materials including such metal and plastic retain their shape without degrading even after being left in the water for many years, so they accumulate in the oceans and rivers as rubbish and cause pollution of the natural environment. In view of the ecology, therefore, there has been a flourish of development in recent years of artificial lures consisting of plastic materials that react with water or light to breakdown and dissolve when they have been left in water, to match natural metabolic cycles.

However, even when plastic materials are used for artificial lures their natural degradation still takes a considerably long time. Plasticizer, which is endocrine disruptor, also must be used for the plastic molds, so concerns have been raised that the plasticizer will dissolve from the artificial lures into the water and cause permanent deformities of fish and other organisms.

For a long time, therefore, materials that degrade more rapidly in the natural environment and which do not, like plasticizer, adversely affect organisms have been developed as materials for artificial lures. As an example of an artificial lure consisting of such material, for example, an artificial lure having the principal components of protein crosslinked by a protein crosslinking enzyme and a water-soluble polysaccharide has been proposed (for example, see Japanese Patent Application Laid-open No. H6-319414).

However, because this artificial lure contains a water-soluble polysaccharide it is transparent on its own, and semi-transparent to translucent when colored. It has therefore been extremely difficult to make it appear to be live bait. Overcoming this requires the inconvenience of having to combine it with a non-transparent material. Moreover, solutions of crosslinked proteins and water-soluble polysaccharides are highly viscous so are difficult to fill into a mold. This causes defective products resulting from inconsistent amounts of fill, poor operationability due to stringiness, and poor operational efficiency due to time taken for filling. As mentioned above, the solutions of the aforementioned materials are highly viscous so it is often the case that once they have engulfed with air bubbles, deairation (degassing) becomes extremely difficult, and the initial specific gravity that determines the performance of the artificial lure cannot be obtained.

### DISCLOSURE OF THE INVENTION

The present invention was developed in view of such conventional information, and provides for an artificial lure that is very environmentally safe and, moreover, has superior manufacturability.

Specifically, the present invention does not become too viscous during manufacturing but rather has moderate viscosity, so it provides for an artificial lure having good manufacturability and which enables degassing also to be performed simply. The present invention further provides for an artificial lure (biodegradable artificial lure) having the ability to gradually degrade naturally without releasing harmful agents, and an artificial lure in which coloring can be added freely and simply to match the tone of live bait.

The artificial lure in the present invention above comprises the following embodiments:
1.
   (1) An artificial lure containing as its chief components a protein crosslinked by a protein crosslinking enzyme, and one type or both of (2) and (3) below:
   (2) A non-water-soluble polysaccharide.
   (3) At least one saccharide selected from a group consisting of monosaccharides, oligosaccharides, glutinous starch syrup, and dextrins.
2. The artificial lure according to 1, wherein said protein is gelatin.
3. The artificial lure according to 1 or 2, wherein the protein crosslinking enzyme is transglutaminase.
4. The artificial lure according to one of 1 through 3, wherein the non-water-soluble polysaccharide is cellulose.
5. The artificial lure according to one of 1 through 4, wherein the non-water-soluble polysaccharide is microcrystalline cellulose.
6. The artificial lure according to one of 1 through 5, wherein the saccharide is at least one saccharide selected from a group consisting of sugar and glutinous starch syrup.
7. The artificial lure according to one of 1 through 6 further containing a fish attractant.
8. The artificial lure according to one of 1 through 7 containing a protein crosslinked by a protein crosslinking enzyme at a ratio of 15 to 35 wt%.
9. The artificial lure according to one of 1 through 8 containing a non-water-soluble polysaccharide at a ratio of 1 to 10 wt%.
10. The artificial lure according to one of 1 through 9 containing a saccharide at a ratio of 1 to 30 wt%.
11.
   (1) Use for manufacturing an artificial lure of a composition containing a protein crosslinked by a protein crosslinking enzyme, and one type or both of (2) and (3) below:
   (2) A non-water-soluble polysaccharide.
   (3) At least one saccharide selected from a group consisting of monosaccharides, oligosaccharides, glutinous starch syrup, and dextrins.
12. Use for manufacturing an artificial lure according to 11, wherein said protein is gelatin.
13. The use for manufacturing an artificial lure according to 11 or 12, wherein the protein crosslinking enzyme is transglutaminase.
14. The use for manufacturing an artificial lure according to one of 11 through 13, wherein the non-water-soluble polysaccharide is cellulose.
15. The use for manufacturing an artificial lure according to one of 11 through 14, wherein the non-water-soluble polysaccharide is microcrystalline cellulose.
16. Use for manufacturing an artificial lure according to one of 11 through 15, wherein the saccharide is at least one saccharide selected from a group consisting of sugar and glutinous starch syrup.
17. Use as an artificial lure of a composition containing
   (1) a protein linked by a protein crosslinking enzyme, and one type or both of (2) and (3) below:
   (2) A non-water-soluble polysaccharide.
   (3) At least one saccharide selected from a group consisting of monosaccharides, oligosaccharides, glutinous starch syrup, and dextrins.
18. The use as an artificial lure of the composition according to 17, wherein said protein is gelatin.
19. The use as an artificial lure of the composition according to 17 or 18, wherein the protein crosslinking enzyme is transglutaminase.
20. The use as an artificial lure of the composition according to one of 17 through 19, wherein the non-water-soluble polysaccharide is cellulose.
21. The use as an artificial lure of the composition according to one of 17 through 20, wherein the non-water-soluble polysaccharide is microcrystalline cellulose.
22. The use as an artificial lure of the composition according to one of 17 through 21, wherein the saccharide is at least one saccharide selected from a group consisting of sugar and glutinous starch syrup.
23. Use as an artificial lure of the composition according to one of 17 through 22, wherein the composition is a composition containing (1) 15 to 35 wt% of protein crosslinked by protein crosslinking enzyme, (2) 1 to 10 wt% of a non-water-soluble polysaccharide if it contains the said non-water-soluble polysaccharide, and (3) 1 to 30 wt% of a saccharide if it contains the said saccharide.

### BRIEF DESCRIPTION OF THE DRAWINGS

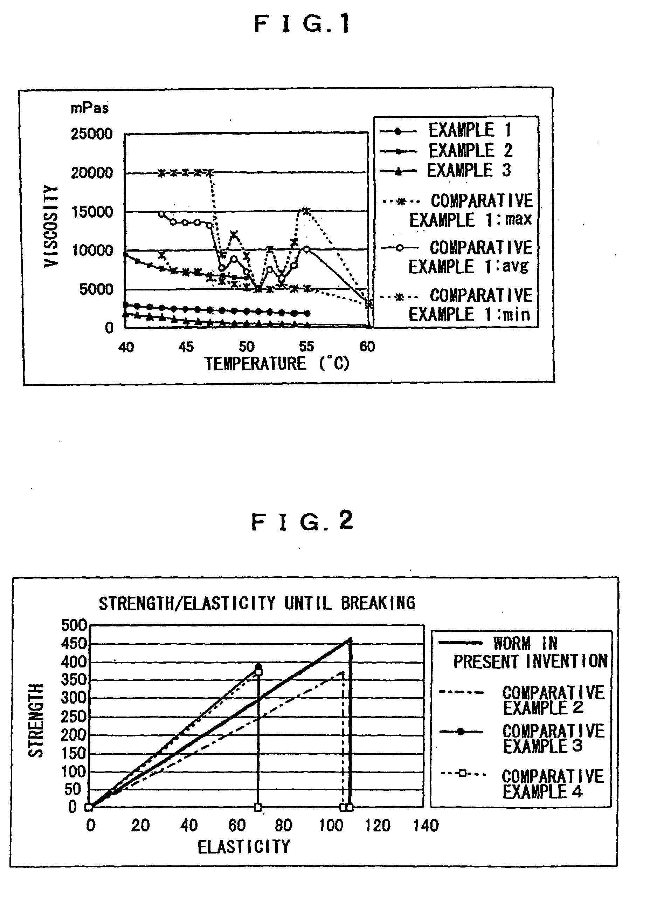

Figure 1 shows the results of the measurement of viscosity at different temperatures for a final mixture of artificial lure for Examples 1 to 3 and Comparative Example 1. In the figure for Comparative Example 1, "max" means the viscosity measured under a state in which a membrane has formed on the surface of themixture ("viscositymax"), "min"meanstheviscositymeasured under a state in which that membrane has been removed ("viscosity min"), and "avg" means the average viscosity (viscosity avg") of both.

Figure 2 shows the relationship between strength (hook strength) and elasticity up to breaking point of the artificial lure (present invention: Example 2) tested in Test Case 1. Comparative Examples 2 to 4 are all results concerning marketed artificial lure (worm).

### BEST MODE FOR CARRYING OUT THE INVENTION

A feature of the artificial lure in the present invention is it contains as chief agents (1) a protein crosslinked by a protein cross linking enzyme, and one type or both of the following (2) and (3): (2) a non-water-soluble polysaccharide, and (3) at least one saccharide (hereafter also called simply "saccharide") selected from a group consisting of monosaccharides, oligosaccharides, glutinous starch syrup, and dextrins.

The artificial lure that is the subject of the present invention means bait artificially modeled on live bait, which is used for catching fish. These include those called lures, worms etc.. Although no particular restrictions apply to the hardness of the said artificial lure, it would preferably be one that mimics the elasticity of live bait.

Independent of its origin, any protein crosslinking enzyme used for crosslinking protein that is a component of the artificial lure in the present invention may be used, but transglutaminase would be preferable. Specifically, examples of transglutaminase that may be used are commercially available products such as Activa (registered trademark) TG-S (product containing 1wt% of transglutaminase) obtainable from Ajinomoto Co., Ltd. (Japan).

The protein used as an artificial lure in the present invention may include protein derived from plants such as defatted oil seed substances (such as defatted soybean), and proteins isolated from them, and protein derived from animals such as gelatin, milk protein, and collagen. It would be preferable if it were animal-derived protein such as gelatin. Specifically, examples of gelatin that may be used are commercially available products such as GelUp (registered trademark) J-3557 obtainable from San-Ei Gen F.F.I., Inc. (Japan)

Processing the above protein using the aforementioned protein crosslinking enzyme, of which transglutaminase is preferable, will enable crosslinking of the above protein. Specifically, these may include a method whereby a composition containing ratios of 15 to 35 wt% of the above protein and 0.1 to 1 wt% of transglutaminase (as Activa TG-S product containing 1 wt% of transglutaminase) is processed for about 15 minutes to 3 hours at a pH of 5 to 8, at 20 to 60°C, or a method whereby a composition containing ratios of 20 to 30 wt% of the above protein and 0.3 to 0.7 wt% of transglutaminase (as Activa TG-S product containing 1 wt% of transglutaminase) is processed for about 30 minutes to 1 hour at a pH of 6 to 7, at 40 to 60°C.

The non-water-soluble polysaccharides that may be used in combination with protein crosslinked by the above protein crosslinking enzyme may widely include polysaccharides that are difficult to dissolve or are insoluble in water. Cellulose is preferable. Granulated or fibrous non-water-soluble polysaccharides having a particle size of approximately 1 to 40 µm are preferable. Such non-water-soluble polysaccharides may include, ideally, crystalline cellulose, microcrystalline cellulose, microfilament cellulose, cotton thread, and other plant derived insoluble fibers, and animal derived insoluble fibers such as silk thread.

Of these, microcrystalline cellulose would be especially preferable. Microcrystalline cellulose is marketed and may specifically include Avicel and a Ceolus series fromAsahi Kasei Corporation (Japan). To disperse non-water-soluble polysaccharides uniformly in artificial lures, a small amount of water-soluble polysaccharides (for example, any water-soluble polysaccharides such as xanthum gum, carboxy methyl cellulose, and karaya gum) may be added as an artificial lure component.

Saccharides that may be used in combination with protein crosslinked by the above protein crosslinking enzyme may include preferably saccharides other than the above non-water-soluble polysaccharides, and specifically at least one saccharide selected from monosaccharides, oligosaccharides, glutinous starch syrup, and dextrins.

Here, monosaccharides means saccharides that cannot be broken down further by hydrolysis, and may include glucose, fructose, maltose, arabinose, quinovose, acetyl amino sugar, 2-deoxy-D-ribose, and uronic acid. Oligosaccharides are saccharides wherein 2 to 10 monosaccharides are glucosidically linked. Oligosaccharides include homo-oligosaccharides composed of single agent monosaccharides such as malt oligosaccharides (comprising maltose, branched oligosaccharides, and cyclic oligosaccharides), fructooligosaccharides, cellooligosaccharides, xylooligosaccharides, mannooligosaccharides, and galactooligosaccharides, and hetero-oligosaccharides composed of at least two types of monosaccharides such as sucro-oligosaccharides (palatinose, teandalose, and lactosucrose). Specifically, illustratable examples are disaccharides such as trehalose, neotrehalose, sucrose, and lactose; trisaccharides such as raffinose, umbelliferose, sialyl lactol, and fucosyl lactose; and, additionally, bran oligosaccharides, agar oligosaccharides, tamarind oligosaccharides, and chitosan oligosaccharides. Sucrose is preferable. Here, sucrose is used as a comprehensive concept comprising sugar. Sugar means sucrose crystals and crushed sucrose crystals, and dried syrup or sugar water, and may be even sucrose itself. The sugar may be manufactured from any of the raw ingredients of sugar cane, beet, coconut, maple, and sorghum. Corresponding to the stage of production, sugar is generally classified into non-centrifugal sugar and cured sugar, and cured sugar is further classified into raw sugar, plantation white sugar, and refined sugar. However, the sugar for use in the present invention may be any of these. Refined sugar is preferable. According to the extent of refinement, refined sugar is classified into white granulated sugar, medium granulated sugar, granulated sugar, white superior soft sugar, white medium soft sugar, and yellow soft sugar. Processed sugar having such sugars as raw ingredients may include cube sugar, rock candy, powdered sugar, granulated sugar, and liquid sugar. The sugar for use in the present invention may be any of these.

Glutinous starch syrup means a liquid sugar having a viscosity of at least 70 wt% of solid content, and a DE (dextrose equivalent) of at least 20 that has been decolored and desalinated after partial hydrolysis of starch using an acid or enzyme, and which comprises different types of glucose polymers in addition to glucose and maltose. Glutinous starch syrup is classified into acid saccharified glutinous starch syrup wherein the starch has in general been partially hydrolyzed using an acid such as oxalic acid, and enzymatic saccharified glutinous starch syrup (high maltose syrup) wherein the starch has been partially hydrolyzed using an enzyme such as α-amylase and β-amylase. The glutinous starch syrup for use in the present invention, may be any of these.

Dextrin is an product of starch partial hydrolysis that is achieved by acidic, enzymatic or heat action. It consists
of a mixture of decomposed products having a degree of polymerization of at least 10 and consists of α-1,4 glucosidic bonds or α-1, 4 and α-1,6 glucosidic bonds in starch. Dextrin includes malt dextrin of no more than 20 DE (dextrin equivalent) and powdered starch syrup of 20 to 40 DE. The dextrin for use in the present invention may be either of these.

One type of these sugars alone may be used or at least two types combined may be used freely. By using at least one saccharide selected from a group consisting of these monosaccharides, oligosaccharides, glutinous starch syrup, and dextrin, the viscosity and specific gravity can be easily adjusted when producing the artificial lure.

In producing the artificial lure, either one of the above non-water-soluble polysaccharides or above saccharides may be used freely in combination with the aforementioned protein, or both the above non-water-soluble polysaccharides or above saccharides may be used in combination with the aforementioned protein. Preferably what could be used are gelatin crosslinked with transglutaminase as the protein, cellulose and preferably microcrystalline cellulose as the non-water-soluble polysaccharide, and glutinous starch syrup or sugar as the above saccharide.

Although no limitation apply to the ratio at which each of the above agents is combined to form the artificial lure of the present invention, for example, the combination ratio of protein crosslinked with protein crosslinking enzyme may normally be 15 to 35 wt% (comprising 0.2 to 2 wt% of protein crosslinking enzyme), and preferably 15 to 30 wt%, and even more preferably 20 to 30 wt%. When the artificial lure is produced by combining a non-water-soluble polysaccharide to the above protein, the ratio of the non-water-soluble polysaccharide may be normally 1 to 10 wt%, and preferably 3 to 10 wt%, and even more preferably 3 to 7 wt%. When the artificial lure is produced by combining the above saccharide to the above protein, the ratio of the said saccharide may be normally 1 to 30 wt%, and preferably 10 to 30 wt%, and even more preferably 20 to 30 wt%. The remainder may be adjusted with water.

The artificial lure of the present application may be prepared in accordance with the following method, for example, but it is not limited to only this: For example, while stirring purified water, a protein (for example, gelatin) is added, which is dissolved by heating and stirring for about 5 to 60 minutes at about 70 to 90°C. A saccharide such as glutinous starch syrup is then added and the mixture stirred. A powdered mixture of saccharide such as sugar and a non-water-soluble polysaccharide (such as microcrystalline cellulose) are further added, which is heated to about 85°C, stirred for about 30 minutes, and liquefied. This is then cooled to about 50°C, whereupon an aqueous solution of a protein crosslinking enzyme (for example, transglutaminase) is added. The mixture is then poured into an artificial lure mold of a desired shape, and maintained for about 20 minutes to 1 hour at around 50°C, whereupon the reaction will crosslink the above protein. Next, the mixture is heated for about 10 to 90 minutes at 80 to 90°C, and then left to cool and solidify to produce the objective artificial lure.

As long as there is no impact on the effectiveness of the present invention, the artificial lure in the present invention may include agents other than those above. Such illustratable agents are substances for increasing the lure of fish (fish attractants), for example.

### Examples

The content of the present invention is explained specifically using the following examples, comparative examples etc., but is not limited to these examples.

Also, unless specially noted, "part" means "weight part" and "%" means "wt%". "*" indicates the registered trademark of San-Ei Gen F.F.I., Inc..

### Examples 1 to 3 and Comparative Example 1

The artificial lure was produced in combination with each agent in accordance with the formulations listed in Table 1.
(1) An amount of 3,430 g of purified water was added to 2,000 g of gelatin (Gel Up* J-3557: San-Ei Gen F.F.I., Inc.; jelly strength of 292 bloom and viscosity of 37 mPas by JIS manufacturing method (JIS K6503)), and the gelatin was left for 60 minutes to expand. The mixture was then heated in a hot bath (85°C), whereupon the mixture was completely liquefied (Gelatin Solution A).
(2) An aqueous solution of a protein crosslinking enzyme (enzyme solution) was produced by dissolving 50 g of transglutaminase (Activa (registered trademark) TG-S: Ajinomoto Co., Ltd. (Japan) in 1,640 g of water.

### <Example 1>

An amount of 500 g of microcrystalline cellulose (Avicel (registeredtrademark) RC591: Asahi Kasei Corporation) was mixed with Gelatin Solution A prepared in (1) above, which was then heated and stirred for 30 minutes at 85°C and liquefied. While this was heated at 50°C in hot bath, the enzyme solution prepared in (2) above was stirred into it. As the final mixture, this was quickly filled into a container in the shape of the artificial lure. It was then heated for 30 minutes in 60°C water, and then again for 60 minutes in 85°C water. After that it was cooled to form a gelatinous artificial lure.

### <Example 2>

An amount of 1330 g of glutinous starch syrup was stirred into the Gelatin Solution A prepared in (1) above, and then a powdered mixture of 1,000 g of sugar (granulated sugar) and 500 g of microcrystalline cellulose (Avicel (registered trademark) RC591: Asahi Kasei Corporation) was added. The resultant mixture was then heated at 85°C for 30 minutes and stirred until it liquefied. It was then heated at 50°C in a hot bath, while at the same time the enzyme solution prepared in (2) above was added and well stirred in. As the final mixture this was quickly filled into a container in the shape of the artificial lure. It was then heated for 30 minutes in a hot water (60°C), and then again for 60 minutes in a hot water (85°C), and then cooled to form a gelatinous artificial lure.

### <Example 3>

A gelatinous artificial lure was prepared the same as per Example 2 except microcrystalline cellulose was not combined.

### <Comparative Example 3>

A gelatinous artificial lure was prepared the same as per Example 1 except 475 g of gum Arabia was added instead of 400 g of microcrystalline cellulose.

The artificial lure in the above Examples 1 and 2 are pale yellow, and the artificial lure in Example 3 is a transparent yellow color. By adding a coloring agent, or applying a coating material to the surface, it was easy to provide the desired color.

The viscosities of the final mixtures for the above artificial lures (Examples 1 to 3 and Comparative Example 1) were measured before they were inserted in the molds. The viscosities of the final mixtures were measured under 40°C, 50°C and 60°C solution temperatures, using a B type rotational viscometer (rotor No. 4; number of revolutions: 10 rpm). The results are shown in Table 1 and Figure 1.

**<Table 1>**

| | | Example 1 | Example 2 | Example 3 | Comparative Example 1 |
|---|---|---|---|---|---|
| Formulation (g) | Gelatin | 2000 | 2000 | 2000 | 2000 |
| | Transglutaminase | 50 | 50 | 50 | 50 |
| | Gum Arabic | - | - | - | 475 |
| | Microcrystalline cellulose | 500 | 500 | - | - |
| | Sugar | - | 1000 | 1000 | - |
| | Glutinous starch syrup | - | 1330 | 1330 | - |
| Mixture viscosity (mPas) | Mixture temperature: 40°C | 3050 | 9500 | 1900 | Not measurable |
| | Mixture temperature: 50°C | 2075 | 6400 | 500 | 7200 |
| | Mixture temperature: 60'C | - | - | 250 | 3050 |

Regarding artificial lure mixture in Comparative Example 1, the liquid surface became solidified (membrane formation) during measurement of viscosity at any of the temperatures from 40°C to 60°C, and conditions were very unstable for measuring viscosity of the subject matter. Therefore, viscosity was measured both when there was a membrane (at this time called the "viscosity max") and when the membrane had been removed (at this time called the "viscosity min"), and the mean average (called the "viscosity avg") of both was calculated. The viscosity of Comparative Example 1 shown in Table 1 means the "viscosity avg". Although not shown in Table 1, the artificial lure mixture in Comparative Example 1 showed a "viscosity max" at 43 to 47°C of at least 20,000 mPas. As the membranous formation on the surface would therefore impede the manufacture of the artificial lure (during filling), it was necessary to add the extra procedure of removing the membrane.

In contrast, the artificial lure mixture in Example 1 was 2,400 mPas, the artificial lure mixture in Example 2 was 7,200 mPas, and the artificial lure mixture in Example 3 was 900 mPas.

The viscosity of the artificial lure mixture in Example 1, which was a combination similar to Comparison 1, was 2,075 mPas at 50°C, which was kept to no more than 30% of the viscosity at 50°C of the artificial lure mixture in Comparison 1 (7,200 mPas).

The viscosity at 50°C of the artificial lure mixture in Example 2 in which a saccharide (sugar (granulated sugar) and glutinous starch syrup) other than a non-water-soluble polysaccharide was added was 6, 400 mPas, which was kept to about 10% less than the viscosity at 50°C of the artificial lure mixture in Comparison 1 (7,200 mPas).

Furthermore, the viscosity at 50°C of the artificial lure mixture in Example 3 in which a non-water-soluble polysaccharide (cellulose) was substituted for a saccharide (sugar (granulated sugar) and glutinous starch syrup) other than a non-water-soluble polysaccharide was 500 mPas, which was kept to no more than 10% of the viscosity at 50°C of the artificial lure mixture in Comparison 1 (7,200 mPas).

Thus, the present invention artificial lure examples can be prepared to have a moderate viscosity during production so as to provide goodmanufacturability and operational efficiency, and further to enable simple degassing in the case of engulfment of air bubbles.

### Test Case 1

Hook strength and elasticity were measured for the artificial lure produced in Example 2.

Specifically, an artificial lure (worm) produced in Example 2 and three marketed artificial lures (worms) (Comparative Examples 2 to 4) were selected and cut into 3 cm slices. Two fishhooks were attached 5 mm apart in the center part of each, and a pulling load was applied to the hooks and the load and time taken until the fish hooks broke were measured using a rheometer. The relationship between hook strength and elasticity is plotted in Figure 2. The maximum load (gf) until breakage and time (seconds) until breakage were judged as hook strength and elasticity, respectively.

As shown in Figure 2, the artificial lure hook strength in the present invention was 463 gf, and elasticity was 109 seconds. However, the hook strength of marketed artificial lures ranges from 370 to 385 gf and elasticity ranges from 70 to 105 seconds, so the artificial lure in the present invention has the same or greater strength and elasticity than existing artificial lures. This confirms the artificial lure in the present invention has special characteristics.

### INDUSTRIAL APPLICABILITY

The artificial lure in the present invention is produced using very safe agents and, moreover, gradually biodegrades, so it is very safe environmentally. Depending on how the present invention is formulated, the mixture of agents can be produced to a moderate viscosity, which provides for good manufacturability and simple degassing even in the case of air bubble engulfment, and a quality, stable product can be provided. Furthermore, the artificial lure in the present invention can be colored at will and simply to a desired color to match live bait. The artificial lure in the present invention also has excellent heat tolerance, so it is useful in terms of its ability to be stored at high temperatures in vehicles in summer, for example, without melting.

## Claims

1. An artificial lure containing as its chief components (1) a protein crosslinked by a protein crosslinking enzyme, and one type or both of (2) and (3) below:
(2) a non-water-soluble polysaccharide; and
(3) at least one saccharide selected froma group consisting ofmonosaccharides, oligosaccharides, glutinous starch syrup, and dextrins.

2. The artificial lure according to claim 1, wherein the protein is gelatin.

3. The artificial lure according to claim 1, wherein the protein crosslinking enzyme is transglutaminase.

4. The artificial lure according to claim 1, wherein the non-water-soluble polysaccharide is cellulose.

5. The artificial lure according to claim 1, wherein the non-water-soluble polysaccharide is microcrystalline cellulose.

6. The artificial lure according to claim 1, wherein the saccharide is at least one selected from a group consisting of sugar and glutinous starch syrup.

7. The artificial lure according to claim 1 further containing a fish attractant.

8. The artificial lure according to claim 1 containing a protein crosslinked by a protein crosslinking enzyme at a ratio of 15 to 35 wt%.

9. The artificial lure according to claim 8 containing a non-water soluble polysaccharide at a ratio of 1 to 10 wt%.

10. The artificial lure according to claims 8 or 9 containing a saccharide at a ratio of 1 to 30 wt%.

11. Use for manufacturing an artificial lure of a composition containing (1) a protein linked by a protein crosslinking enzyme, and one type or both of (2) and (3) below:
(2) a non-water-soluble polysaccharide; and
(3) at least one saccharide selected from a group consisting of monosaccharides, oligosaccharides, glutinous starch syrup, and dextrins.

12. The use for manufacturing an artificial lure according to claim 11, wherein the protein crosslinking enzyme is transglutaminase, the protein is gelatin, the non-water-soluble polysaccharide is cellulose, and the saccharide is at least one saccharide selected from a group consisting of sugar and glutinous starch syrup.

13. Use as an artificial lure of a composition containing (1) a protein linked by a protein crosslinking enzyme, and one type or both of (2) and (3) below:
(2) a non-water-soluble polysaccharide.
(3) at least one saccharide selected from a group consisting of monosaccharides, oligosaccharides, glutinous starch syrup, and dextrins.

14. The use as an artificial lure of a composition according to claim 13, wherein the protein crosslinking enzyme is transglutaminase, the protein is gelatin, the non-water-soluble polysaccharide is cellulose, and the saccharide is at least one saccharide selected from a group consisting of sugar and glutinous starch syrup.

15. The use as an artificial lure of a composition according to claim 14, wherein the composition is a composition containing (1) 15 to 35 wt% of a protein crosslinked by a protein crosslinking enzyme, (2) 1 to 10 wt% of a non-water-soluble polysaccharide if it contains the said non-water-soluble polysaccharide, and (3) 1 to 30 wt% of a saccharide if it contains the said saccharide.
